# EUROPÄISCHE PATENTSCHRIFT

(11) **EP 2 241 232 B1**
(45) Veröffentlichungstag und Bekanntmachung des Hinweises auf die Patenterteilung: **09.05.2012**
(21) Anmeldenummer: 10003053.5
(22) Anmeldetag: 23.03.2010
(51) Int. Cl.: A47J 37/07

(54) **Grill**
Grill
Grill

(30) Priorität: 15.04.2009 DE 202009005477 U; 10.06.2009 DE 202009008071 U
(43) Veröffentlichungstag der Anmeldung: 20.10.2010
(73) Patentinhaber: Landmann Holding GmbH & Co. KG, 27711 Osterholz-Scharmbeck (DE)
(72) Erfinder: Tullney, Heiko, 22767 Hamburg (DE); Wissmann, Günter, 22869 Schenefeld (DE)
(74) Vertreter: Möller, Friedrich

(56) Entgegenhaltungen:
- US-A- 3 276 440
- US-A- 3 286 705
- US-A- 3 664 322
- US-A- 3 841 299
- US-A- 4 930 491
- US-A1- 2005 088 002

## Beschreibung

Die Erfindung betrifft einen Grill, insbesondere einen Holzkohlegrill, gemäß dem Oberbegriff des Anspruchs 1.

In der Praxis sind Grills, vor allem sogenannte Kugelgrills, die eine gewölbte Grillschüssel, insbesondere in Form einer Halbkugel, aufweisen, weit verbreitet. Solche gewölbten Grillschüsseln verfügen über eine schräge bzw. bogenförmige Wandung, wodurch ein Grillrost nicht in verschiedenen Abständen über der glühenden Holzkohle angeordnet werden kann.

Der Erfindung liegt die Aufgabe zugrunde, einen Grill zu schaffen, der eine Höhenverstellung des Grillrosts ermöglicht und dabei eine einfache Handhabung gewährleistet.

Das Patent US-A-4 930 491 beschreibt einen Grillrost, der einem Grill zugeordnet werden kann. Diesem Grillrost sind Griffe zugeordnet, die nicht fest mit dem Rost verbunden sind. Zum Transport des Rosts werden diese Griffe in den Rost eingehängt. Der Rost weist sogenannte finger structures auf, die zur Aufnahme der Griffe dienen. Die Anmeldung US-A-2005/088002 beschreibt einzelne Griffe, die zwei Haken aufweisen, mit denen ein Grillrost angehoben werden kann.

Ein Grill zur Lösung der genannten Aufgabe weist die Merkmale des Anspruchs 1 auf. Demnach ist am Grillrost mindestens ein höhenveränderlicher Griff angeordnet. Bevorzugt sind dem Grillrost zwei gegenüberliegende Griffe zugeordnet. Solche, höhenveränderliche Griffe am Grillrost ermöglichen es dem Bediener, den Grillrost einfach zu bewegen. Weiterhin weisen die Grillschüssel oder der Halter mindestens eine Aussparung auf zur verdrehsicheren Fixierung des Grillrosts durch die Griffe. Durch diese Ausgestaltung der Grillschüssel bzw. des Halters und zumindest der Griffe ist sichergestellt, dass der Grillrost sich nicht selbsttätig verdrehen kann. Das ist vor allem dann wichtig, wenn der Grillrost durch Verdrehen in der Höhe veränderbar ist.

Vorzugsweise sind die Griffe so ausgebildet, dass sie zumindest seitlich gegenüber dem Grillrost und/oder der Grillschüssel hervorragen. Dadurch wird erreicht, dass sich die Griffe nicht zu sehr aufheizen.

Gemäß einer bevorzugten Weiterbildung der Erfindung sind die Griffe zur Veränderung ihrer Höhe am Grillrost mindestens nahezu parallel zur Längsmittelachse des Grillrosts bewegbar, insbesondere zwischen einer oberen und einer unteren Endposition. Damit können die Griffe in jeder eingestellten Höhe des Grillrosts vom Bediener ergriffen werden. Insbesondere ragen die Griffe durch die Führung parallel zur Längsmittelachse stets gleich weit seitlich gegenüber dem Grillrost und/oder der Grillschüssel hervor.

Vorzugsweise sind am Grillrost Mittel vorgesehen zur insbesondere geradlinigen Führung der Griffe entlang ihres Bewegungsweges. Durch diese Führung sind die Griffe so am Grillrost angeordnet, dass sie entlang einer zumindest nahezu senkrechten Achse gegenüber dem Grillrost bewegt werden können. Damit wird erreicht, dass die Griffe stets seitlich aus den Umrissen des Halters und/oder der Grillschüssel herausragen und unabhängig von der Höheneinstellung des Grillrosts im Halter sowie während der Höhenverstellung nicht verkanten können.

Gemäß einer bevorzugten Weiterbildung der Erfindung sind am Grillrost zwei mit Abstand übereinander angeordnete Anschläge vorgesehen, die mit einer jeweiligen schlitzartigen Führung der Griffe korrespondieren. Die zwei übereinander geordneten Anschläge greifen dabei in die schlitzartige Führung jedes Griffs ein, sodass derselbe auf einfache Weise geradlinig entlang seines Bewegungsweges bewegbar ist.

Vorzugsweise ist der Grillschüssel ein Halter zuzuordnen, wobei der Halter mehrere mit Abstand übereinander angeordnete Auflagen zur höhenveränderlichen Aufnahme des Grillrosts aufweist. Der mindestens eine Halter mit übereinander angeordneten Auflagen ermöglicht es auf einfache Weise, den Grillrost in unterschiedlichen Höhen über der glühenden Holzkohle anzuordnen.

Gemäß einer Ausgestaltung der Erfindung ist der Halter in der Grillschüssel anzuordnen. Dadurch ist in einer eine schräge oder kugelförmige Wandung aufweisenden Grillschüssel eine Höhenverstellung des Grillrosts einfach möglich. Der Halter kann in die Grillschüssel gestellt werden, folglich sind keine Veränderungen an der Grillschüssel notwendig, um mittels des Halters einen erfindungsgemäßen Grill zu schaffen.

Bei einer alternativen Ausgestaltung der Erfindung ist der Halter auf einem Rand der Grillschüssel anzuordnen. Damit kann mittels des Halters oberhalb der Grillschüssel eine höhenveränderbare Aufnahme für den Grillrost geschaffen werden. Ein solcher Halter kann auch auf einem bereits bestehenden Grill angeordnet werden. Der Halter kann zudem zwischen der Grillschüssel und einem dann auf den Halter aufgelegten Deckel positioniert werden.

Gemäß einer bevorzugten Weiterbildung der Erfindung korrespondiert der Halter mit dem Rand der Grillschüssel. Damit wird die formschlüssige Fixierung des Halters auf der Grillschüssel einfach ermöglicht.

Vorzugsweise ist der Halter lösbar mit der Grillschüssel verbindbar. Ein solcher lösbarer Halter kann, z. B. um den Grill zu reinigen, auf einfache Weise von der Grillschüssel entfernt werden.

Gemäß einer bevorzugten Weiterbildung der Erfindung weist der Grill Mittel zur formschlüssigen lösbaren Verbindung des Halters mit der Grillschüssel auf. Diese Mittel können sowohl am Halter, als auch an der Grillschüssel selbst angeordnet sein. Die Mittel verbessern die Stabilität des Halters, zudem halten sie den Halter so in oder auf der Grillschüssel, dass er nicht verrutschen oder von der Grillschüssel rutschen kann.

Vorzugsweise ist das Mittel zur formschlüssigen lösbaren Verbindung des Halters mit dem Rand der Grillschüssel als ein am Halter angeordneter, umlaufender Kragen ausgebildet. Ein solcher Kragen stabilisiert den Halter in seiner Form, und zwar auch bei starker Erhitzung des Halters. Zudem kann ein solcher Kragen um die Grillschüssel herumgreifen oder in die Grillschüssel hineingreifen, sodass der Halter in keiner Richtung von der Grillschüssel geschoben werden kann.

Ein weiteres Mittel zur formschlüssigen lösbaren Verbindung des Halters mit dem Rand der Grillschüssel können am Halter angeordnete und in die Grillschüssel hineinragende Zungen sein. Solche Zungen positionieren den Halter formschlüssig auf der Grillschüssel, indem sie an der Innenseite der Grillschüssel anliegen. Damit werden vergleichbare Vorteile erreicht, wie sie mit einem umlaufenden Kragen erreichbar sind.

Es ist auch denkbar die Grillschüssel mit nach innen vorstehenden Positioniermitteln für den Halter zu versehen. Dadurch ist sichergestellt, dass sich der Halter mit dem Grillrost immer in horizontaler Ausrichtung in der Grillschüssel befindet. Eine Schrägstellung des Grillrosts durch seitliches Verschieben des Halters in der Grillschüssel wird so wirksam vermieden.

Gemäß einer besonders bevorzugten Ausgestaltung der Erfindung ist der Halter als ein eine senkrechte Wandung aufweisender Halter, insbesondere ringartiger Halter mit einer umlaufenden senkrechten Wandung, wie z.B. in Form einer Zylinderwandung, ausgebildet. Ein solcher Halter eignet sich bevorzugt für Kugelgrills und andere Grills mit einer gewölbten und/oder in der Grundfläche runden Grillschüssel. Der Halter ermöglicht durch die senkrechten Wandungen, dass der Grillrost in jeder Höheneinstellung einen gleichen Abstand zur Wandung des Halters aufweist. Ein zylindrische Halter zentriert sich automatisch in der Grillschüssel und zwar in einer Höhe, wo die Grillschüssel einen Durchmesser aufweist, der dem Durchmesser des Halters entspricht. Zudem ermöglicht ein derart ausgebildeter Halter eine einfache Anordnung desselben auf dem Rand der Grillschüssel, wenn der Halter einen Durchmesser aufweist, der dem Durchmesser des Randes der Grillschüssel entspricht.

Für andere Grillformen, insbesondere solche mit z. B. viereckigen Grillschüsseln mit schrägen Wandungen, ist der Halter als rahmenartiger Halter mit vier senkrechten Wandungen versehen, die miteinander verbunden sind zum insgesamt einstückigen Halter, der bei einer viereckigen Grillschüssel ebenfalls eine viereckige Gestalt aufweist. Bei anderen Grillschüsseln weist der Halter eine Gestalt auf, die der Gestalt der jeweiligen Grillschüsseln entspricht.

Nach einer bevorzugten Weiterbildung der Erfindung sind die Auflagen des Halters als gegenüber der mindestens einen senkrechten Wandung des Halters nach innen vorstehende Laschen ausgebildet. Diese vorzugsweise horizontalen Laschen dienen dazu, den Grillrost abzustützen. Der Grillrost braucht dazu nur einfach von oben auf die Laschen aufgelegt zu werden. Die Laschen können an den Halter angeschweißt sein, sie können aber auch teilweise aus dem Halter ausgestanzt und zu einer Innenseite des Halters aus der Fläche desselben herausgebogen sein, vorzugsweise senkrecht, also unter einem Winkel von 90°.

Bevorzugt sind die Laschen in mehreren parallelen Ebenen angeordnet, wobei in jeder Ebene mehrere Laschen vorgesehen sind. Durch die mehreren Laschen jeder Ebene kann der Grillrost sich auf mehreren Laschen gleichzeitig abstützten, wodurch er kippsicher vom Halter fixiert ist. Die in mehreren parallelen Ebenen angeordneten Laschen ermöglichen es, den Grillrost in unterschiedlichen Abständen über der glühenden Holzkohle in der Grillschüssel bzw. auf der Grillschüssel zu positionieren.

Besonders bevorzugt ist die Anzahl der Laschen in jeder Ebene gleich, wobei die Laschen verschiedener Ebenen in gleichen Bereichen am Umfang der Halters angeordnet sind. Die Laschen können dabei übereinander angeordnet sein. Damit wird der Grillrost stets an der gleichen Stelle abgestützt. Außerdem ist es denkbar, die Laschen übereinander versetzt, also treppenartig, anzuordnen.

Gemäß einer bevorzugten Weiterbildung der Erfindung sind zumindest die in einer der parallelen Ebenen angeordneten Laschen den Zungen zur formschlüssigen lösbaren Verbindung des Halters mit dem Rand der Grillschüssel zugeordnet. Weil die Zungen in die Grillschüssel hineinragen, und die Laschen bevorzugt an in die Grillschüssel hineinragenden Abschnitten der Zungen angeordnet sind, wird auf einfache Weise mit den an den Zungen angeordneten bzw. den Zungen zugeordneten Laschen eine weitere Ebene zur Anordnung des Grillrosts über der glühenden Holzkohle geschaffen. Diese Ebene liegt unterhalb eines auf den Rand der Grillschüssel aufgesetzten Halters und erweitert diesen dadurch nach unten. Es ist zudem denkbar, dass an einer jeweiligen Zunge mehrere Laschen zur Unterstützung des Grillrosts angebracht sind. Dabei befinden sich an jeder Zunge die gleiche Anzahl von Laschen, wobei auf diese Weise mehrere parallele Ebenen zur Aufnahme des Grillrosts unterhalb des Halters geschaffen werden.

Gemäß einer besonders bevorzugten Ausgestaltung der Erfindung weist der Grillrost am Außenumfang mehrere mit den Auflagen bzw. Laschen des Halters korrespondierende Aussparungen auf, die durch Relativbewegung des Grillrosts zum Halter in bzw. außer Deckung mit den Auflagen bzw. Laschen bringbar sind. Durch eine Drehung des auf den Auflagen bzw. Laschen liegenden Grillrosts ist es möglich, den Grillrost aus dem Einflussbereich der Auflagen bzw. Laschen herauszubewegen. Dann kann der Grillrost in seiner Höhe verändert werden, indem er auf eine Ebene mit höher- oder tieferliegenden Auflagen bzw. Laschen gebracht wird. Der in der Höhe veränderte Grillrost wird dann durch erneutes Verdrehen aus der Verstellposition herausgebracht, in der die Aussparungen des Grillrosts sich nicht mehr in Deckung mit den Auflagen bzw. Laschen des Halters befinden, sodass der Grillrost in einer veränderten Höhe wieder auf den Auflagen des Halters ruht. Insbesondere wenn die Auflagen bzw. Laschen übereinander angeordnet sind, kann der Grillrost durch ein Verdrehen in die Verstellposition in alle Ebenen bewegt werden. Weiterhin ist es denkbar, dass die Laschen in einer treppenartigen Anordnung übereinander im Halter angeordnet sind. Dadurch wird wirksam verhindert, dass der Grillrost von einer weit oben liegenden Ebene bei erreichen der Verstellposition in eine weit unten liegende Ebene fällt. Für jede Verstellung der Höhe des Grillrosts in eine angrenzende Ebene ist bei einer solchen Anordnung ein weiteres Verdrehen in eine dann erforderliche Verstellposition notwendig. Dies macht den Grill besonders sicher in der Bedienung.

Bevorzugt weist der Grill Mittel zur zeitweiligen verdrehsicheren Fixierung des Grillrosts am Halter auf. Eine solche verdrehsichere Fixierung des Grillrosts verhindert ein unbeabsichtigtes Verdrehen desselben in eine Verstellposition, in der es in eine tiefere Ebene oder auf die glühende Holzkohle fallen könnte. Bevorzugte Mittel können z. B. am Grillrost vorstehende Vorsprünge oder dem Halter zugeordnete Aussparungen bzw. Vorsprünge sein. Hierdurch kommt eine zuverlässige, formschlüssige, aber einfach lösbare, Fixierung des Grillrosts gegenüber dem Halter zustande.

Weiterhin ist es denkbar, den Halter mit der Grillschüssel fest zu verbinden. Auf diese Weise wird der Halter von der Grillschüssel stabilisiert, sodass die Wandung des Halters dünner sein kann. Möglich ist es auch, mehrere miteinander nicht verbundene senkrechte Wandabschnitte mit der Grillschüssel fest zu verbinden. Ein solcher Halter braucht keine umlaufende Wandung aufzuweisen. Es reichen schmale Blechstreifen, an denen die Laschen befestigt sind. Üblicherweise ist die Anzahl der schmalen Wandabschnitte genauso groß wie die Anzahl der Laschen in jeder Ebene. Bevorzugt ist ein solcher mehrere nicht miteinander verbundene Wandabschnitte aufweisender Halter innerhalb der Grillschüssel angeordnet.

Bevorzugte Ausführungsbeispiele des erfindungsgemäßen Grills werden nachfolgend anhand der Zeichnung näher erläutert. In dieser zeigen:
- Fig. 1: einen nicht erfindungsgemässen Grill mit einem Halter in einer teilweise geschnittenen Seitenansicht,
- Fig. 2: den Halter der Fig. 1 zur Aufnahme eines Grillrosts in einer perspektivischen Ansicht,
- Fig. 3: den Halter sowie den Grillrost des Grills der Fig. 1 in einer oberen Grillposition,
- Fig. 4: den Halter sowie den Grillrost des Grills der Fig. 1 in einer Verstellposition,
- Fig. 5: den Halter sowie den Grillrost des Grills der Fig. 1 in einer unteren Grillposition,
- Fig. 6: einen Grill mit einem Halter nach einem Ausführungsbeispiel der Erfindung in einer teilweise geschnittenen Ansicht, analog zu Fig. 1,
- Fig. 7: einen Halter des Grills der Fig. 6 in einer perspektivischen Ansicht, und
- Fig. 8: einen Grillrost des Grills der Fig. 6 in einer perspektivischen Ansicht.

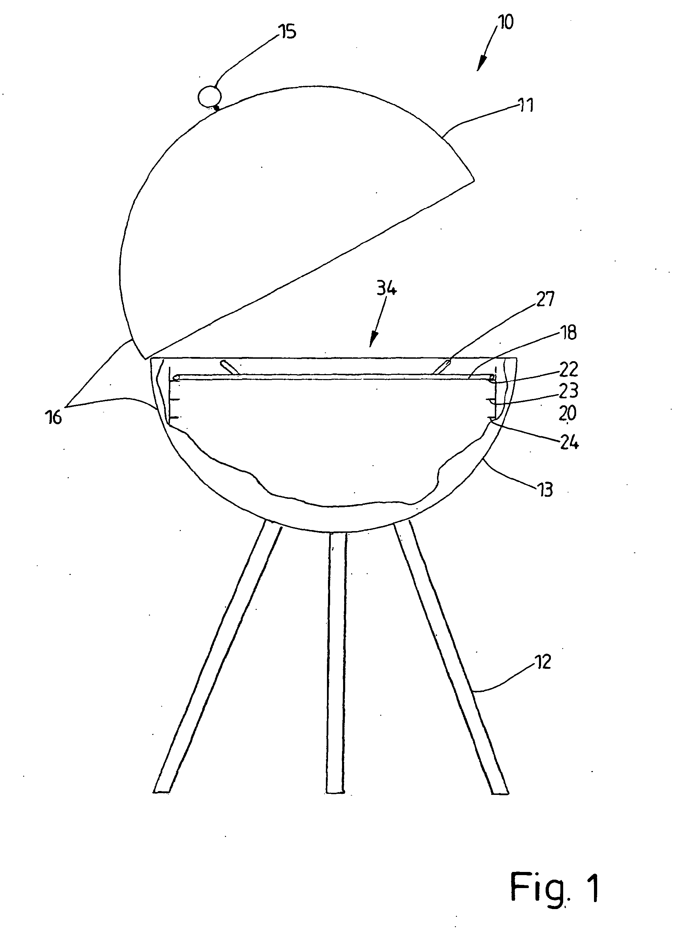

Die Fig. 1 zeigt einen als Kugelgrill 10 ausgebildeten Grill. Der Kugelgrill 10 weist eine Grillschüssel 13 auf, welche mit einem Deckel 11 verschließbar ist. Dazu kann der Deckel 11 mittels eines Handgriffs 15 von der Grillschüssel 13 abgehoben werden. In der Fig. 1 ist der Deckel 11 in einer halb abgehobenen Position dargestellt. Die Grillschüssel 13 weist schräge Wandungen auf, wobei die Grillschüssel 13 im gezeigten Beispiel halbkugelförmig ausgebildet ist. Ebenso ist der Deckel 11 halbkugelförmig ausgebildet. Die Grillschüssel 13 sowie der Deckel 11 bilden zusammen den Kugelgrill 10. Die Grillschüssel 13 sowie der Deckel 11 des Kugelgrills 10 bestehen aus Stahl, vorzugsweise aus Edelstahl.

Der Kugelgrill 10 weist an einer Unterseite der Grillschüssel 13 drei Beine 12 auf, auf denen der Kugelgrill 10 steht. Anstatt auf Beinen 12 kann die Grillschüssel 13 auch auf einer Säule angeordnet sein. Weiterhin ist es denkbar, dass die Grillschüssel 13 auf einem geeigneten Gestell, z.B. einem Grillwagen, angeordnet ist.

In der Grillschüssel 13 kann brennbares Material, z.B. Holzkohle entzündet werden. Oberhalb der Holzkohle wird innerhalb der Grillschüssel 13 mittels eines Halters 20 ein in seiner Grundform runder Grillrost 18 aus vorzugsweise Edelstahl waagerecht angeordnet. Die durch die glühende Holzkohle erzeugte Hitze steigt zum Grillrost 18 auf. Damit können auf dem Grillrost 18 aufgelegte Speisen zubereitet werden.

Der Halter 20 ist gebildet aus einem ringförmig geformten Stahlblech, insbesondere aus Edelstahl. Die umlaufende Wandung des Halters 20 verläuft senkrecht, sodass der Halter 20 als Zylinderring ausgebildet ist. Er ist dabei etwas größer als der Durchmesser des Grillrosts 18 und kleiner als der größte Durchmesser der Grillschüssel 13. Somit kann der Halter 20 in der Grillschüssel 18 sowie der Grillrost 18 in den Halter 20 eingesetzt werden.

Der Halter 20 steht innerhalb der Grillschüssel 13 ohne zusätzliche Befestigungsmittel. Durch die zylinderförmige Ausbildung des Halters 20 zentriert dieser sich selbständig innerhalb der Grillschüssel 13, sodass Positionierhilfen nicht unbedingt notwendig sind. Zusätzlich können jedoch innerhalb der Grillschüssel 13 nicht gezeigte Vorsprünge oder andere Positionierhilfen fest angeordnet sein, welche in die Grillschüssel 13 hineinragen. Die Positionierhilfen ermöglichen eine formschlüssige mittige Fixierung des Halters 20 mit dem Grillrost 18 innerhalb der Grillschüssel 13.

Der Halter 20 weist an einem oberen Rand 30 und einem unteren Rand 31 je einen umlaufenden Falz 32 auf. Diese Falze 32 sind in den Halter 20 eingeprägt. Die Falze 32 stabilisieren die runde Gestalt des Halters 20.

An einer Innenseite 21 des Halters 20 sind als Laschen 22, 23, und 24 ausgebildete Auflagen für den Grillrost 18 angeordnet. Diese Laschen 22, 23 und 24 sind gleichmäßig um den Umfang des Halters 20 verteilt, wobei sie in mehreren parallelen, waagerechten Ebenen angeordnet sind. Gleiche Bezugsziffern bezeichnen Laschen 22, 23 bzw. 24 in einer gemeinsamen Ebene. Im gezeigten Beispiel sind jeweils vier Laschen 22, 23 und 24 in jeder von drei übereinanderliegenden Ebenen angeordnet, wobei in jeder Ebene eine gleiche Anzahl von Laschen 22, 23 bzw. 24 an der gleichen Position am Umfang des Halters 20 angeordnet ist. Zudem weisen alle Laschen 22, 23, 24 die gleiche Form auf. Die jeweiligen Laschen 22, 23 bzw. 24 unterschiedlicher Ebenen liegen damit übereinander in Deckung. Jedoch ist eine andere Anzahl von Laschen je Ebene sowie eine andere Anzahl von Ebenen, in denen Laschen angeordnet sind, denkbar. Die Laschen 22, 23 und 24 sind aus dem Blech des Halters 20 teilweise ausgestanzt und gegenüber der Innenseite 21 des Halters 20 nach innen weisend um 90° umgebogen, so dass die Laschen 22, 23 und 24 horizontalgerichtet unter einem rechten Winkel zur senkrechten Innenseite 21 des Halters 20 verlaufen. Die Laschen 22, 23 und 24 können aber auch an der Innenseite 21 des Halters 20 angeschweißt oder angenietet sein.

Der Grillrost 18 kann wahlweise auf allen Laschen 22, 23 oder 24 einer Ebene aufliegen, und zwar jeweils auf Laschen 22, 23 oder 24. Der Grillrost 18 kann durch die Anordnung der Laschen 22, 23 bzw. 24 in unterschiedlichen Ebenen in verschiedenen Abständen über der Holzkohle in der Grillschüssel 13 des Kugelgrills 10 angeordnet werden.

Der Grillrost 18 weist einen umlaufenden, geschlossenen Außenring 25, sowie eine Vielzahl von parallelen Streben 26 auf. Die Streben 26 sind an ihren Enden mit dem Außenring 25 und an Knotenpunkten 35 mit zumindest einen Großteil der Streben 26 kreuzenden, bogenförmigen Verbindungsstreben 36 verschweißt. Zudem weist der Grillrost 18 zwei Griffe 27 auf, womit er handhabbar ist. Der Außenring 25, die Streben 26 sowie die Verbindungsstreben 35 und die Griffe 27 bestehen im gezeigten Ausführungsbeispiel aus Edelstahldraht mit kreisförmigem Querschnitt, wobei die Drähte aber auch andere Querschnitte aufweisen können.

Am Außenumfang 28 des Grillrosts 18 sind Aussparungen angeordnet, welche als Einbuchtungen 33 des Außenrings 25 ausgebildet sind. Die Einbuchtungen 33 korrespondieren mit der Form der Laschen 22, 23 und 24 sowie mit der Anzahl der Laschen 22, 23 bzw. 24 je Ebene. Im gezeigten Beispiel sind vier Einbuchtungen 33 vorhanden. Diese Anzahl der Einbuchtungen 33 entspricht der Anzahl von Laschen 22, 23 und 24 je Ebene. Jede andere Anzahl von Einbuchtungen 33, die einer anderen Anzahl von Laschen 22, 23 bzw. 24 entspricht, ist jedoch denkbar. Die Einbuchtungen 33 sind derart angeordnet, dass sie in zumindest einer waagerechten Position des Grillrosts 18 mit der Anordnung der Laschen 22, 23, 24 in Deckung gebracht werden können, um den Grillrost 18 im Halter 20 frei auf- und abbewegen zu können.

Die Griffe 27 sind an einer durch den Benutzer zugänglichen Oberseite 34 des Grillrosts 18 angeordnet. Die Griffe 27 ragen dabei schräg nach oben aus der Ebene des Grillrosts 18 heraus und sind im gezeigten Beispiel einstückig mit zwei Streben 26 des Grillrosts 18 verbunden. Durch die Griffe 27 am Grillrost 18 ist eine Höhenverstellung des Grillrosts 18 innerhalb des Halters 20 auch dann möglich, wenn Speisen auf demselben liegen.

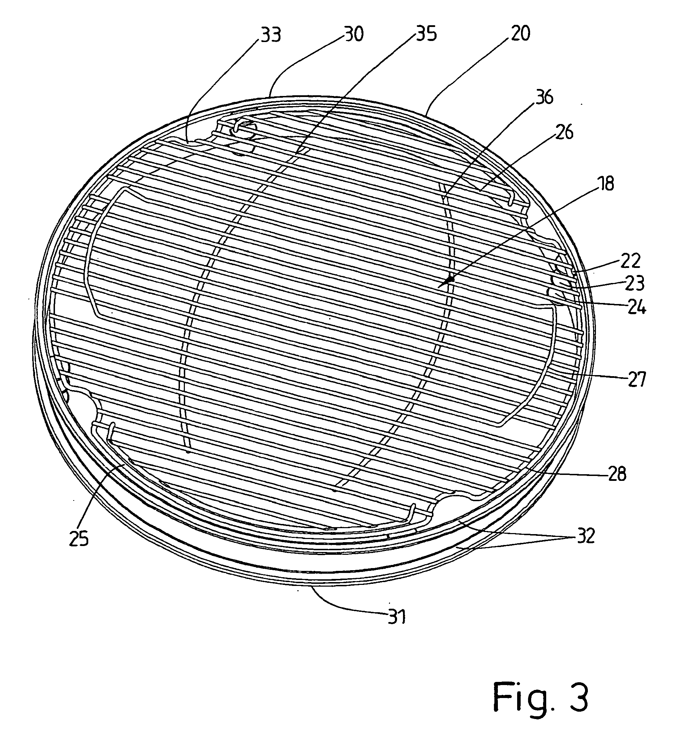

Die Fig. 3 zeigt den Grillrost 18 innerhalb des Halters 20 in einer oberen Grillposition. Der Grillrost 18 liegt dabei mit dem Außenumfang 28 auf allen sich in der oberen Ebene befindenden Laschen 22 auf. Der Grillrost 18 ist in diesem Zustand so ausgerichtet, dass die Einbuchtungen 33 des Grillrosts 18 nicht im Bereich der Laschen 22 angeordnet sind, sodass der Grillrost 18 mit dem Außenring 25 auf den Laschen 22 aufliegt.

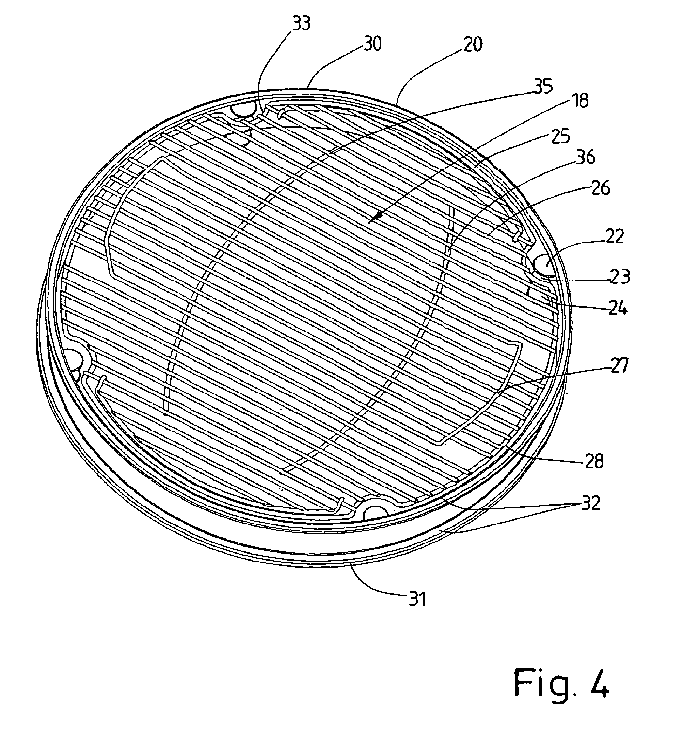

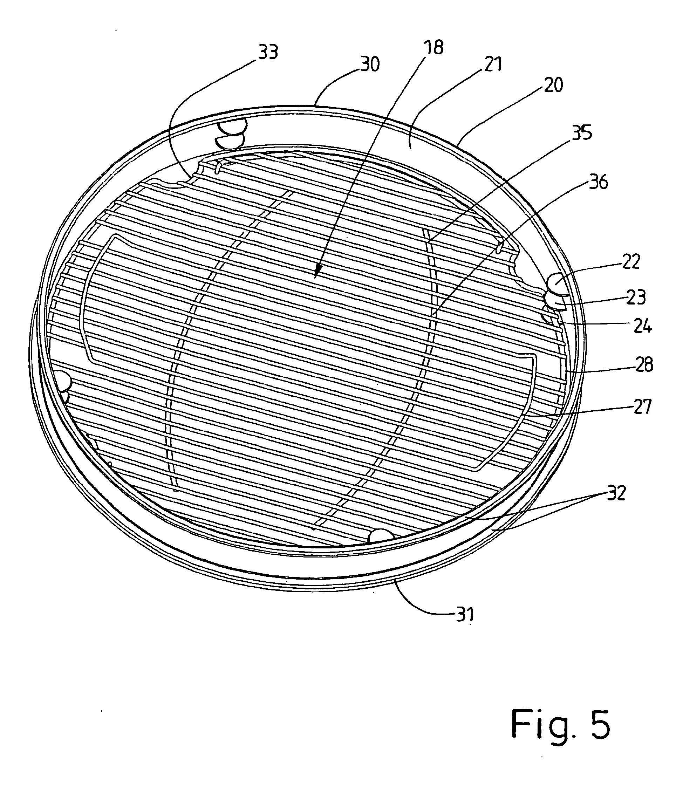

Durch Verdrehen des Grillrosts 18 um seine vertikale Mittelachse können die Einbuchtungen 33 in eine Position gebracht werden, welche sich mit den Laschen 22, 23 und 24 im Halter 20 deckt (Fig. 4). Dies kann mit Hilfe der Griffe 27 geschehen ohne den Grillrost 18 aus seiner horizontalen Ebene herausbewegen zu müssen. Sodann kann der Grillrost 18 innerhalb des Halters 20 in seiner Höhe verändert werden auf das Niveau der Laschen 23 in der mittleren Ebene oder der Laschen 24 in der unteren Ebene. Durch erneutes Verdrehen des Grillrosts 18 kann derselbe auf einer so erreichten anderen Ebene auf den entsprechenden Laschen 23 bzw. 24 abgelegt werden, und zwar in der Fig. 5 auf den Laschen 24 der untersten Ebene. Der Grillrost 18 kann so in jede gewünschte Ebene bewegt und innerhalb dieser Ebene auf die entsprechenden Laschen 22, 23 bzw. 24 aufgelegt werden, ohne dass der Grillrost 18 dazu verkippt werden muss. So kann das Grillgut auf dem Grillrost 18 verbleiben, wenn der Abstand über der Holzkohle verändert werden soll.

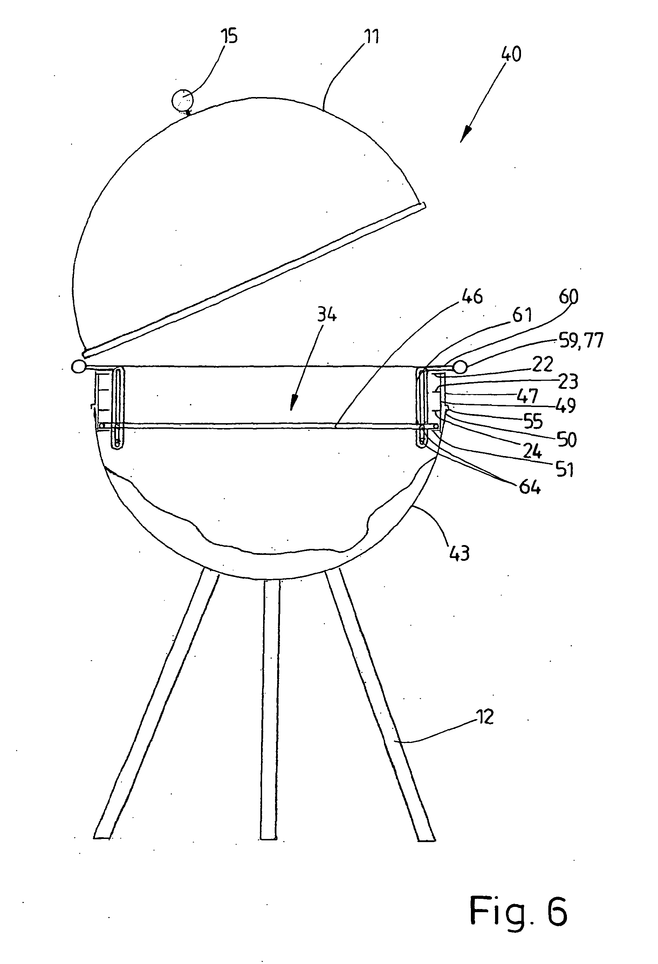

Die Fig. 6 zeigt ein Ausführungsbeispiel der Erfindung, nämlich einen wiederum als Kugelgrill 40 ausgebildeten Grill. Der Kugelgrill 40 weist eine Grillschüssel 43 auf, auf dessen Rand 50 ein Halter 47 angeordnet ist. Der Aufbau des Kugelgrills 40 ist ähnlich dem Aufbau des Kugelgrills 10, gleiche Teile erhalten daher gleiche Bezugsziffern und werden nicht näher erläutert.

Dem Halter 47 ist ein in seiner Grundform runder Grillrost 46 aus vorzugsweise Edelstahl waagerecht zugeordnet. Der Grillrost 46 ist ähnlich dem Grillrost 18 des ersten Ausführungsbeispiels ausgebildet. Die Höhenverstellung des Grillrost 46 erfolgt analog zur Höhenverstellung des Grillrosts 18 im ersten Beispiel. Gleiche Teile erhalten daher im Weiteren gleiche Bezugsziffern und werden ebenfalls nicht näher erläutert.

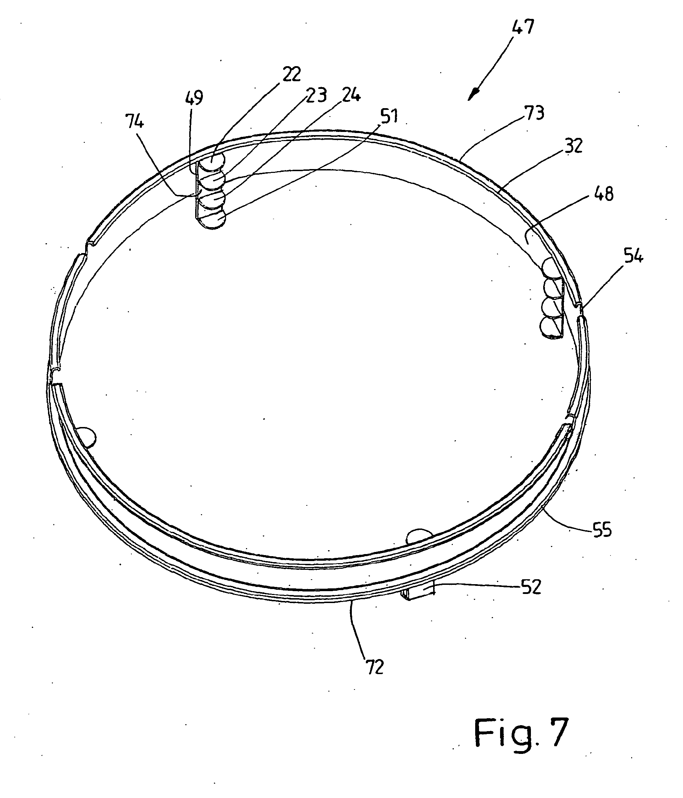

Die Fig. 7 zeigt den Halter 47 des Kugelgrills 40. Der Halter 47 ist analog zum Halter 20 des ersten Beispiels gebildet aus einem ringförmig geformten Stahlblech, insbesondere aus Edelstahl. Der Halter 47 verfügt ebenfalls über eine senkrecht angeordnete Wandung, sodass der Halter 47 als geschlossener Zylinderring ausgebildet ist. Der Halter 47 ist auf dem Rand 50 der Grillschüssel 43 aufgesetzt. Sein Durchmesser entspricht dabei dem Durchmesser des Randes 50 der Grillschüssel 43.

Der Halter 47 weist zur Fixierung auf dem Rand 50 der Grillschüssel 43 einen Kragen 55 auf. Dieser Kragen 55 ist an einem unteren Rand 72 des Halters 47 angeformt. Der Kragen 55 greift über den Rand 50 der Grillschüssel 43 des Kugelgrills 40 hinweg. Damit ist der Halter 47 formschlüssig auf dem Rand 50 der Grillschüssel 43 fixiert. An einer Innenseite 48 des Halters 47 sind vier Zungen 49 angeordnet. Diese Zungen 49 verlaufen nahezu parallel zur Innenseite 48 des Halters 47, und ragen über den unteren Rand 72 des Halters 47 hinaus. Dadurch ragen die Zungen 49 in die Grillschüssel 43 des Kugelgrills 40 hinein. Die Zungen 49 sind aus Stahlblech, vorzugsweise aus demselben Stahl bzw. Edelstahl wie der Halter 47, gebildet.

Der Halter 47 weist Laschen 22, 23, 24 und 51 auf. Diese Laschen 22, 23, 24 und 51 sind an einer Innenseite 74 jeder Zunge 49 angeordnet. Je eine der Laschen 22, 23, 24 und 51 ist dabei an einer der Zungen 49 angeordnet, wobei die Laschen 22, 23, 24 und 51 in mehreren parallelen, waagerechten Ebenen angeordnet sind. Gleiche Bezugsziffern bezeichnen analog zum ersten Beispiel Laschen 22, 23, 24 bzw. 51 in einer gemeinsamen Ebene. Die Laschen 22, 23, 24 und 51 ermöglichen damit im Halter 47 eine Höhenverstellung des Grillrosts 46 analog zum ersten Beispiel. Weil die Zungen 49 über den unteren Rand 72 des Halters 47 herausragen, und die Laschen 24 und 51 an diesen herausragenden Abschnitten 52 der Zungen 49 angeordnet sind, sind einige Laschen, und zwar im gezeigten Ausführungsbeispiel die Laschen 24 und 51, unterhalb des Halters 47 angeordnet. Dadurch kann der Grillrost 46 insbesondere auch unterhalb des unteren Randes 72 des Halters 47 auf den Laschen 24 oder 51 angeordnet werden.

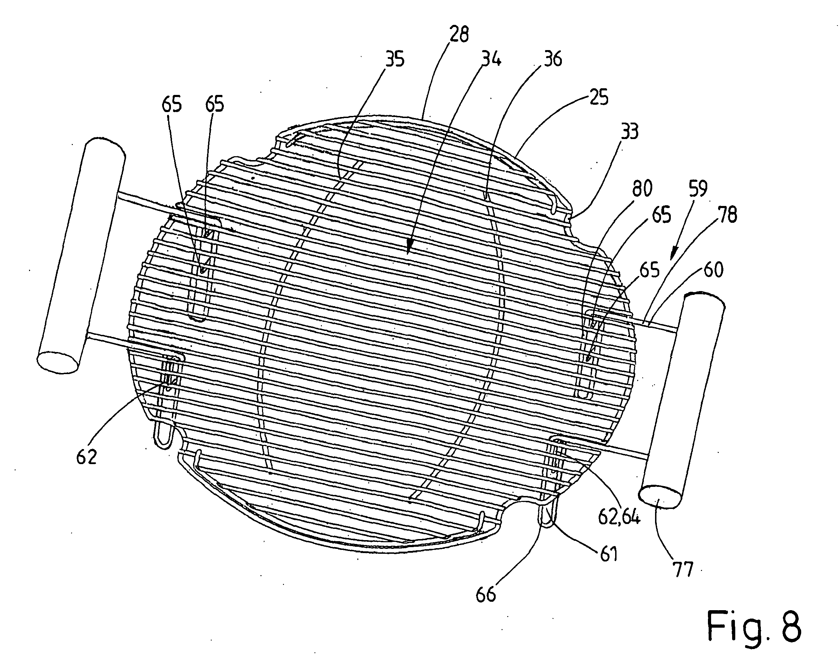

Die Fig. 8 zeigt den Grillrost 46 mit zwei höhenveränderlich daran angeordneten Griffen 59. Jeder Griff 59 weist einen Griffkörper 77 auf. Diese Griffkörper 77 können vom Bediener ergriffen werden, um den Grillrost 46 zu bewegen. Dazu sind die Griffkörper 77 außerhalb der Umrisse des Grillrosts 46 angeordnet. Weiterhin weist jeder Griff 59 Griffstreben 60 auf. Die Griffstreben 60 sind aus einem Draht bzw. Edelstahldraht gebildet, vorzugsweise aus dem gleichen Material, wie die übrigen Teile des Grillrosts 46. Es sind an jedem Griffkörper 77 zwei Griffstreben 60 angeordnet, welche parallel zueinander verlaufen. Die Griffstreben 60 sind im rechten Winkel abgewinkelt. Waagerechte Abschnitte 78 der Griffstreben 60 verlaufen von jedem Griffkörper 77 ausgehend parallel zum Grillrost 46, und zwar an der Oberseite 34 des Grillrosts 46. Senkrechte Abschnitte 80 verlaufen sodann vertikal durch die Ebene des Grillrosts 46.

Jeder Griff weist zwei parallele Führungen 61 auf. Gebildet wird jede der gleichen Führungen 61 durch eine haamadelförmige Umbiegung 66 der senkrechten Abschnitte 80 der Griffstreben 60. Die so gebildeten zwei parallelen Schenkel jedes senkrechten Abschnitts 80 bilden eine beidseitige Begrenzung der Führung 61. Durch den waagerechten Abschnitt 78, welcher die Führung 61 an einer oberen Seite verschließt, entsteht eine obere Begrenzung der Führung 61. Dazu kann der haarnadelförmig umgebogene Teil des senkrechten Abschnittes 80 mit seinem Ende am waagerechten Abschnitt 78 festgeschweißt sein. Die haarnadelförmige Umbiegung 66 begrenzt die Führung 61 an einer unteren Seite. Durch die zuvor erläuterte Ausgestaltung der Griffstreben 60 weist jeder Grill 59 zwei parallele Führungen 61 auf, die langlochartig ausgebildet sind.

Am Grillrost 46 sind Anschlagmittel 62 angeordnet, und zwar je Führung 61 ein Anschlagmittel 62. Die Anschlagmittel 62 sind aus C-förmig gebogenen Drähten gebildet. Jedes Anschlagmittel 62 verfügt über einen senkrechten Steg 64 und zwei waagerechte, parallele Schenkel 65 an den übereinander liegenden Enden des Stegs 64. Die Schenkel 65 verlaufen deckungsgleich übereinander.

Die Anschlagmittel 62 sind jeweils mit einem oberen der waagerechten Schenkel 65 an mindestens einer, vorzugsweise zwei, der Streben 26 des Grillrosts 46 befestigt, insbesondere verschweißt. Der jeweilige obere waagerechte Schenkel 65 verläuft zumindest annähernd quergerichtet zu den Streben 26, an denen er befestigt ist. Die Anschlagmittel 62 erstrecken sich in jeweils einer senkrechten Ebene und sind so am Grillrost 46 befestigt, dass sie nach unten aus dem Grillrost 46 herausragen.

Die oberen waagerechten Schenkel 65 sowie die unteren waagerechten Schenkel 65 der Anschlagmittel 62 bilden Anschläge. Die oberen und unteren Anschläge jedes Anschlagmittels 62 greifen in eine der Führungen 61 der Griffe 59 ein. Dabei ist die Breite der Führungen 61 so bemessen, dass die Griffe 59 im wesentlichen spielfrei durch die Anschläge bildenden Schenkel 65 am Grillrost 46 geführt werden. Dadurch sind die Griffe 59 gegen Verkanten gesichert. Auf diese Weise können die Griffe 59 nahezu spielfrei parallel zur Mittelachse des Grillrosts 46 auf- und abbewegt werden.

Der Bewegungsweg der Griffe 59 relativ zum Grillrost 46 wird durch die oberen Begrenzung jeder Führung 61, nämlich den waagerechten Abschnitt 78 der Griffstrebe 60, bzw. die unteren Begrenzung der Führung 61, nämlich haarnadelförmige Umbiegung 66 des senkrechten Abschnitts 80 der Griffstrebe 60, festgelegt. An einem jeweiligen Ende des Bewegungsweges der Griffe 59 liegen entweder die oberen Begrenzungen oder die unteren Begrenzungen an einem der durch die Schenkel 65 gebildeten Anschläge an. Dadurch, dass jeder Griff 59 zwei gleich ausgebildete Führungen 61 aufweist, ist der Griffkörper 77 sowohl in einer oberen Endposition als auch einer unteren Endposition des Bewegungsweges des jeweiligen Griffes 59 waagerecht angeordnet. Die Länge des Bewegungsweges der Griffe 59 entspricht mindestens dem maximalen Verstellweg des Grillrosts 46 im Halter 47.

Zur Fixierung des Grillrosts 46 gegen Verdrehen innerhalb des Halters 47 weist der Halter 47 Aussparungen auf, welche als von oben offene, U-förmige Vertiefungen 54 ausgebildet sind. Diese Vertiefungen 54 sind an solchen Positionen des oberen Randes 73 des Halters 47 angeordnet, dass die waagerecht verlaufenden Abschnitte 78 der Griffstreben 60 in diese eingreifen können, wenn der Grillrost 46 auf den Laschen 22, 23, 24 oder 51 aufliegt. Soll der Grillrost 46 in der Höhe verändert werden, so kann der Benutzer die Griffe 59 nach oben aus dem Grillrost 46 herausziehen, bis die untere Begrenzung am jeweils unteren Schenkel 65 anliegt. Dabei werden die waagerechten Abschnitte 78 der Griffstreben 60 aus den Vertiefungen 54 des Halters 47 herausbewegt. Damit ist der Grillrost 46 nicht mehr gegen Verdrehen gesichert, sodass er in eine Verstellposition verdreht werden kann, in der die Einbuchtungen 33 im Außenring 25 des Grillrosts 46 sich in Deckung mit den Laschen 22, 23, 24 und 51 befinden. Die Verstellung der Höhe des Grillrosts 46 im Halter 47 erfolgt dann analog zur Verstellung der Höhe des Grillrosts 18 im Halter 20 des Kugelgrills 10 des ersten Beispiels. Nach der Verstellung des Grillrosts 46 und der Drehung desselben aus einer Verstellposition heraus können die Griffe 49 vom Bediener wieder in Richtung des Grillrosts 46 abgesenkt werden. Damit gelangen die waagerecht angeordneten Abschnitte 78 der Griffstreben 60 wieder in Eingriff mit den Vertiefungen 54 innerhalb des Halters 47, wodurch der Grillrost 46 wieder gegen Verdrehen gesichert ist.

Die waagerecht verlaufenden Abschnitte 78 der Griffstreben 60 liegen in einer untersten Position der Griffe 59 auf dem Grillrost 46 auf, und zwar zwischen den Streben 26, an denen das zugehörige Anschlagmittel 62 befestigt ist. Damit sind die Griffkörper 77 in dieser Position in einer Ebene mit dem Grillrost 46 angeordnet. Diese Ausgestaltung ermöglicht es, dass die Griffe 59 in jeder Position des Grillrosts 46 innerhalb des Halters 47 soweit abgesenkt werden können, dass mittels der Griffstreben 60 eine Fixierung des Grillrosts 46 gegenüber dem Halter 47 durch Eingreifen der Griffstreben 60 in die Vertiefungen 54 möglich ist.

Die Länge der Führung 61 ist so bemessen, dass die Griffe 59 auch bei einer Anordnung des Grillrosts 46 in einer untersten Ebene innerhalb des Halters 47 weit genug nach oben bewegt werden können, um die Abschnitte 78 der Griffstreben 60 aus den Vertiefungen 54 des Halters 47 zu heben.

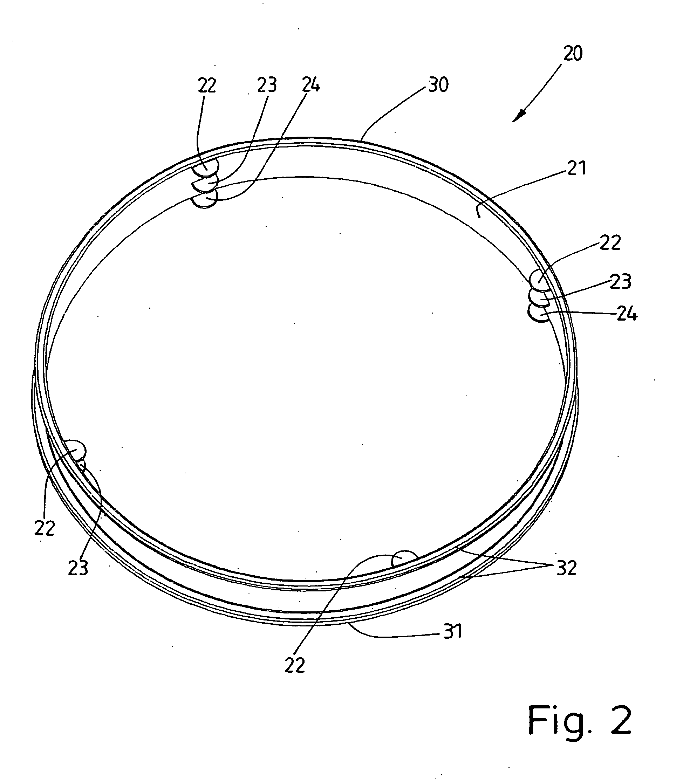

Der Grillrost 46 der Fig. 8 ist auch bei einem Kugelgrill 10 des ersten Beispiels der Fig. 1 bis 5 einsetzbar. Der Grillrost 46 korrespondiert dann in seiner Größe mit dem in die Grillschüssel 13 eingesetzten Halter 20. Weiterhin ist auch der Grillrost 18 der Fig. 3 beim Kugelgrill 40 des Ausführungsbeispiels der Fig. 6 und 7 verwendbar, wenn er in seiner Größe mit dem Halter 47 korrespondiert.

### Bezugszeichenliste:

- 10: Kugelgrill
- 11: Deckel
- 12: Bein
- 13: Grillschüssel
- 15: Handgriff
- 18: Grillrost
- 20: Halter
- 21: Innenseite
- 22: Lasche
- 23: Lasche
- 24: Lasche
- 25: Außenring
- 26: Strebe
- 27: Griff
- 28: Außenumfang
- 30: oberer Rand
- 31: unterer Rand
- 32: Falz
- 33: Einbuchtung
- 34: Oberseite
- 35: Knotenpunkt
- 36: Verbindungsstrebe
- 40: Kugelgrill
- 43: Grillschüssel
- 46: Grillrost
- 47: Halter
- 48: Innenseite
- 49: Zunge
- 50: Rand
- 51: Lasche
- 52: Abschnitt
- 54: Vertiefung
- 55: Kragen
- 59: Griff
- 60: Griffstrebe
- 61: Führung
- 62: Anschlagmittel
- 64: Steg
- 65: Schenkel
- 66: Umbiegung
- 72: unterer Rand
- 73: oberer Rand
- 74: Innenseite
- 77: Griffkörper
- 78: Abschnitt
- 80: Abschnitt

## Patentansprüche

1. Grill, insbesondere Holzkohlegrill, mit einer eine umlaufende, vorzugsweise schräge, Wandung aufweisenden Grillschüssel (43), einem der Grillschüssel zugeordneten Grillrost (46) und mindestens einem höhenveränderlich am Grillrost (46) angeordneten Griff (59), **dadurch gekennzeichnet, dass** die Grillschüssel (43) oder ein in der Grillschüssel (43) oder auf einem Rand (50) der Grillschüssel (43) angeordneter Halter (47) mindestens eine Aussparung (54) aufweist zur verdrehsicheren Fixierung des Grillrosts (46) durch den wenigstens einen Griff (59).

2. Grill nach Anspruch 1, **dadurch gekennzeichnet, dass** der mindestens eine Griff (59) zumindest teilweise aus den Umrissen des Grillrosts (46) und/oder der Grillschüssel (43) herausragt.

3. Grill nach einem der Ansprüche 1 oder 2, **dadurch gekennzeichnet, dass** der mindestens eine Griff (59) zur Veränderung seiner Höhe am Grillrost (46) zumindest nahezu parallel zur Längsmittelachse des Grillrosts (46) bewegbar ist, insbesondere innerhalb eines begrenzten Bewegungsweges.

4. Grill nach einem oder mehreren der Ansprüche 1 bis 3, **dadurch gekennzeichnet, dass** am Grillrost (46) Mittel vorgesehen sind zur vorzugsweise geradlinigen Führung des mindestens einen Griffs (59) entlang seines Bewegungsweges.

5. Grill nach einem der Ansprüche 1 bis 4, **dadurch gekennzeichnet, dass** am Grillrost (46) zwei übereinander angeordnete Anschläge (63) vorgesehen sind zur verdrehsicheren bzw. kippsicheren höhenveränderlichen Aufnahme des mindestens einen Griffs (59) am Grillrost (46).

6. Grill nach einem oder mehreren der Ansprüche 1 bis 5, **dadurch gekennzeichnet, dass** der mindestens eine Griff (59) eine schlitzartige Führung (61) aufweist.

7. Grill nach einem oder mehreren der Ansprüche 1 bis 6, **dadurch gekennzeichnet, dass** der Halter mehrere mit Abstand übereinander angeordnete Auflagen zur höhenveränderlichen Aufnahme des Grillrosts (46) aufweist.

8. Grill nach einem oder mehreren der Ansprüche 1 bis 7, **dadurch gekennzeichnet, dass** der Halter (47) mit dem Rand der Grillschüssel (43) korrespondiert.

9. Grill nach einem oder mehreren der Ansprüche 1 bis 8, **gekennzeichnet durch** Mittel zur formschlüssigen lösbaren Verbindung des Halters (47) mit der Grillschüssel (43), wobei vorzugsweise die Mittel zur formschlüssigen lösbaren Verbindung des Halters (47) mit dem Rand (50) der Grillschüssel (43) als ein am Halter (47) angeordneter, umlaufender Kragen (55) ausgebildet sind.

10. Grill nach Anspruch 9, **dadurch gekennzeichnet, dass** die Mittel zur formschlüssigen lösbaren Verbindung des Halters (47) mit dem Rand (50) der Grillschüssel (43) als am Halter (47) angeordnete und in die Grillschüssel (43) hineinragende Zungen (49) ausgebildet sind.

11. Grill nach einem oder mehreren der Ansprüche 1 bis 10, **dadurch gekennzeichnet, dass** der Halter (47) eine senkrechte Wandung aufweist, vorzugsweise als ringartiger Halter (47) mit einer umlaufenden senkrechten Wandung, insbesondere in Form einer Zylinderwandung, ausgebildet ist und vorzugsweise die Auflagen gegenüber der vorzugsweise senkrechten Wandung des Halters (47) nach innen vorstehende Laschen (51) sind.

12. Grill nach Anspruch 11, **dadurch gekennzeichnet, dass** die Laschen (51) in mehreren parallelen Ebenen angeordnet sind, wobei in jeder Ebene mehrere Laschen (51) angeordnet sind, insbesondere die Anzahl der Laschen (51) in jeder Ebene gleich ist, wobei die Laschen (51) verschiedener Ebenen in gleichen Bereichen am Umfang des Halters (47) angeordnet sind.

13. Grill nach einem der Ansprüche 10 bis 12, **dadurch gekennzeichnet, dass** zumindest die in einer der parallelen Ebenen angeordneten Laschen (51) den Zungen (49) zur formschlüssigen lösbaren Verbindung des Halters (47) mit dem Rand (50) der Grillschüssel (43) zugeordnet sind.

14. Grill nach einem der vorhergehenden Ansprüche, **dadurch gekennzeichnet, dass** der Grillrost (46) am Außenumfang mehrere mit den Auflagen bzw. Laschen (51) des Halters korrespondierende Aussparungen aufweist, die durch Relativbewegung des Grillrosts (46) zum Halter (47) in bzw. außer Deckung mit den Auflagen bzw. Laschen (51) bringbar sind.

## Claims

1. Barbecue, in particular a charcoal barbecue, having a barbecue fire bowl (43) which has a circumferential, preferably inclined, wall, having a grilling grate (46) which is associated with the barbecue fire bowl, and having at least one handle (59) which is arranged on the grilling grate (46) in a vertically adjustable manner, **characterized in that** the barbecue fire bowl (43) or a holder (47) which is arranged in the barbecue fire bowl (43) or at an edge (50) of the barbecue fire bowl (43) has at least one cutout (54) for fixing the grilling grate (46), such that it cannot rotate, by virtue of the at least one handle (59).

2. Barbecue according to Claim 1, **characterized in that** the at least one handle (59) projects at least partially out of the contours of the grilling grate (46) and/or of the barbecue fire bowl (43).

3. Barbecue according to either of Claims 1 and 2, **characterized in that** the at least one handle (59) can be moved at least virtually parallel to the longitudinal axis of the grilling grate (46), in particular within a limited movement path, in order to change its height on the grilling grate (46).

4. Barbecue according to one or more of Claims 1 to 3, **characterized in that** means are provided on the grilling grate (46) for the purpose of guiding, preferably in a straight line, the at least one handle (59) along its movement path.

5. Barbecue according to one of Claims 1 to 4, **characterized in that** two stops (63), which are arranged one above the other, are provided on the grilling grate (46) for the purpose of holding the at least one handle (59) on the grilling grate (46) in a vertically adjustable manner such that it cannot rotate or such that it cannot tilt.

6. Barbecue according to one or more of Claims 1 to 5, **characterized in that** the at least one handle (59) has a slot-like guide (61).

7. Barbecue according to one or more of Claims 1 to 6, **characterized in that** the holder has a plurality of supports, which are arranged at a distance one above the other, for holding the grilling grate (46) in a vertically adjustable manner.

8. Barbecue according to one or more of Claims 1 to 7, **characterized in that** the holder (47) corresponds to the edge of the barbecue fire bowl (43).

9. Barbecue according to one or more of Claims 1 to 8, **characterized by** means for connecting the holder (47) to the barbecue fire bowl (43) in an interlocking and detachable manner, with the means for connecting the holder (47) to the edge (50) of the barbecue fire bowl (43) in an interlocking and detachable manner being in the form of a circumferential collar (55) which is arranged on the holder (47).

10. Barbecue according to Claim 9, **characterized in that** the means for connecting the holder (47) to the edge (50) of the barbecue fire bowl (43) in an interlocking and detachable manner are in the form of tongues (49) which are arranged on the holder (47) and project into the barbecue fire bowl (43).

11. Barbecue according to one or more of Claims 1 to 10, **characterized in that** the holder (47) has a vertical wall, is preferably in the form of an annular holder (47) with a circumferential vertical wall, in particular in the form of a cylindrical wall, and the supports are preferably lugs (51) which project inwards relative to the preferably vertical wall of the holder (47).

12. Barbecue according to Claim 11, **characterized in that** the lugs (51) are arranged at a plurality of parallel levels, with a plurality of lugs (51) being arranged at each level, in particular the number of lugs (51) at each level being equal, with the lugs (51) of different levels being arranged in the same regions over the circumference of the holder (47).

13. Barbecue according to one of Claims 10 to 12, **characterized in that** at least the lugs (51) which are arranged at one of the parallel levels are associated with the tongues (49) for connecting the holder (47) to the edge (50) of the barbecue fire bowl (43) in an interlocking and detachable manner.

14. Barbecue according to one of the preceding claims, **characterized in that** the grilling grate (46) has, over the outer circumference, a plurality of cutouts which correspond to the supports or lugs (51) of the holder and which can be moved into and out of alignment with the supports or lugs (51) by moving the grilling grate (46) relative to the holder (47).

## Revendications

1. Barbecue, en particulier barbecue au charbon de bois, doté d'une cuvette de barbecue (43) comprenant une paroi périphérique, de préférence inclinée, doté d'une grille de barbecue (46) associée à la cuvette de barbecue, et doté d'au moins une poignée (59) disposée sur la grille de barbecue (46) de manière variable en hauteur, **caractérisé en ce que** la cuvette de barbecue (43) ou un support (47) disposé dans la cuvette de barbecue (43) ou sur un bord (50) de la cuvette de barbecue (43) comprend au moins un évidement (54) en vue de la fixation antirotation de la grille de barbecue (46) au moyen de l'au moins une poignée (59).

2. Barbecue selon la revendication 1, **caractérisé en ce que** l'au moins une poignée (59) fait saillie au moins en partie à partir des contours de la grille de barbecue (46) et/ou de la cuvette de barbecue (43).

3. Barbecue selon la revendication 1 ou 2, **caractérisé en ce que** l'au moins une poignée (59) peut être déplacée au moins presque parallèlement à l'axe médian longitudinal de la grille de barbecue (46), en particulier sur une course de déplacement limitée, en vue de la modification de sa hauteur sur la grille de barbecue (46).

4. Barbecue selon l'une quelconque ou plusieurs des revendications 1 à 3, **caractérisé en ce que** des moyens sont prévus sur la grille de barbecue (46) en vue du guidage de préférence rectiligne de l'au moins une poignée (59) le long de sa course de déplacement.

5. Barbecue selon l'une quelconque des revendications 1 à 4, **caractérisé en ce que** deux butées (63) disposées l'une au-dessus de l'autre sont prévues sur la grille de barbecue (46) en vue de la réception variable en hauteur antirotation ou antibasculement de l'au moins une poignée (59) sur la grille de barbecue (46).

6. Barbecue selon l'une quelconque ou plusieurs des revendications 1 à 5, **caractérisé en ce que** l'au moins une poignée (59) comprend un guidage (61) de type fente.

7. Barbecue selon l'une quelconque ou plusieurs des revendications 1 à 6, **caractérisé en ce que** le support comprend plusieurs appuis disposés à distance les uns au-dessus des autres en vue de la réception variable en hauteur de la grille de barbecue (46).

8. Barbecue selon l'une quelconque ou plusieurs des revendications 1 à 7, **caractérisé en ce que** le support (47) correspond au bord de la cuvette de barbecue (43).

9. Barbecue selon l'une quelconque ou plusieurs des revendications 1 à 8, **caractérisé par** des moyens en vue de la liaison par engagement positif libérable du support (47) à la cuvette de barbecue (43), les moyens en vue de la liaison par engagement positif libérable du support (47) au bord (50) de la cuvette de barbecue (43) étant de préférence réalisés en tant que rebord (55) périphérique disposé sur le support (47).

10. Barbecue selon la revendication 9, **caractérisé en ce que** les moyens en vue de la liaison par engagement positif libérable du support (47) au bord (50) de la cuvette de barbecue (43) sont réalisés en tant que languettes (49) disposées sur le support (47) et pénétrant dans la cuvette de barbecue (43).

11. Barbecue selon l'une quelconque ou plusieurs des revendications 1 à 10, **caractérisé en ce que** le support (47) comprend une paroi verticale, de préférence est réalisé en tant que support (47) de type annulaire doté d'une paroi verticale périphérique, en particulier sous la forme d'une paroi cylindrique, et les appuis sont de préférence des pattes (51) saillant vers l'intérieur par rapport à la paroi de préférence verticale du support (47).

12. Barbecue selon la revendication 11, **caractérisé en ce que** les pattes (51) sont disposées dans plusieurs plans parallèles, plusieurs pattes (51) étant disposées dans chaque plan, le nombre des pattes (51) étant en particulier le même dans chaque plan, les pattes (51) de différents plans étant disposées dans des mêmes régions sur la périphérie du support (47).

13. Barbecue selon l'une quelconque des revendications 10 à 12, **caractérisé en ce qu'**au moins les pattes (51) disposées dans l'un des plans parallèles sont associées aux languettes (49) en vue de la liaison par engagement positif libérable du support (47) au bord (50) de la cuvette de barbecue (43).

14. Barbecue selon l'une quelconque des revendications précédentes, **caractérisé en ce que** la grille de barbecue (46) comprend, au niveau de la périphérie extérieure, plusieurs évidements correspondants aux appuis ou pattes (51) du support, lesquels évidements peuvent être amenés, par un déplacement relatif de la grille de barbecue (46) par rapport au support (47), en coïncidence et hors de coïncidence avec les appuis ou les pattes (51).
